(19)

Europäisches Patentamt

European Patent Office

Office européen des brevets

(11) **EP 4 245 407 A1**

(12) **EUROPEAN PATENT APPLICATION**
published in accordance with Art. 153(4) EPC

(43) Date of publication:
**20.09.2023 Bulletin 2023/38**

(21) Application number: **21891928.0**

(22) Date of filing: **10.11.2021**

(51) International Patent Classification (IPC):
**B01J 20/22** (2006.01)       **B01J 20/28** (2006.01)
**C01B 32/50** (2017.01)

(52) Cooperative Patent Classification (CPC):
**B01J 20/22; B01J 20/28; C01B 32/50**

(86) International application number:
**PCT/JP2021/041433**

(87) International publication number:
**WO 2022/102683 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.11.2020   JP 2020190362**

(71) Applicants:
• **AGC INC.**
  **Chiyoda-ku,**
  **Tokyo 1008405 (JP)**
• **AGC Si-Tech Co., Ltd.**
  **Fukuoka 808-0027 (JP)**

(72) Inventors:
• **MUROTANI Eisuke**
  **Tokyo 100-8405 (JP)**
• **KOGUCHI Ryohei**
  **Tokyo 100-8405 (JP)**
• **YAMADA Taku**
  **Tokyo 100-8405 (JP)**
• **NAKAHARA Katsumasa**
  **Tokyo 100-8405 (JP)**
• **KATAYAMA Hajime**
  **Tokyo 100-8405 (JP)**
• **INOUE Masaki**
  **Kitakyushu-shi, Fukuoka 808-0027 (JP)**

(74) Representative: **Müller-Boré & Partner**
**Patentanwälte PartG mbB**
**Friedenheimer Brücke 21**
**80639 München (DE)**

(54) **ADSORBENT**

(57)     The present invention provides a solid adsorbent which can efficiently recover an acidic gas and can increase the amount of acidic gas recovered. This adsorbent contains an inorganic porous body and an amine compound, wherein the inorganic porous body has a peak diameter of pores of 20-100 nm as determined on the basis of a nitrogen adsorption method, and has an oil absorption amount of at least 230 ml/100 g or a pore volume of 1.2-3.5 cm$^3$/g.

EP 4 245 407 A1

**Description**

TECHNICAL FIELD

The present invention relates to an adsorbent, and more particularly to a solid adsorbent that adsorbs an acid gas, particularly carbon dioxide, included in a gas to be treated.

BACKGROUND ART

In recent years, as countermeasures against global warming, separation and capture of carbon dioxide, which is a greenhouse gas, have attracted attention, and methods for separating carbon dioxide from exhaust gases emitted from automobiles, factories, and the like, the atmosphere, and the like have been developed.

Among currently proposed carbon dioxide separation and capture techniques, a wet chemical absorption method of absorbing carbon dioxide in an amine aqueous solution is generally used. The chemical absorption method using the amine aqueous solution can treat a large amount of carbon dioxide, but on the other hand, this chemical absorption method has problems in handleability, such as being unsuitable for direct treatment of a high-temperature gas to be treated. Furthermore, regeneration of the amine aqueous solution that absorbs carbon dioxide consumes a large amount of energy, and there is also a problem of high treating costs.

Therefore, in recent years, attention has been focused on development of a solid adsorption method using a solid adsorbent, which is a dry chemical absorption method. The solid adsorbent is one in which a carbon dioxide adsorption capacity is imparted to pore surfaces of a porous material, and is obtained, for example, by fixing amine on the porous material. Compared to the amine aqueous solution, the solid adsorbent is a low-environmental-load material with less toxic, less corrosive, less flammable, and excellent safety and handleability, and carbon dioxide can be adsorbed with low energy, and thus, cost reduction can be expected.

Various proposals have been made for the solid adsorbent used in such a solid adsorption method, and for example, Patent Literature 1 proposes a carbon dioxide adsorbent in which silica gel having a particle size of 1 mm or more and 5 mm or less, an average pore size of 10 nm or more and 100 nm or less, and a pore volume of 0.1 $cm^3$/g or more and 1.3 $cm^3$/g or less is impregnated with an amine compound. In addition, Patent Literature 2 proposes a carbon dioxide separating material including a polyamine impregnation in which a support is impregnated with a polyamine having at least two isopropyl groups on a nitrogen atom, and describes that the support having a specific surface area (BET) of 50 $m^2$/g or more and 1000 $m^2$/g or less, and a pore volume of 0.1 $cm^3$/g to 2.3 $cm^3$/g is used. Non-Patent Literature 1 describes that an adsorption amount of carbon dioxide depends on an amount of amine compound impregnating a solid adsorbent.

CITATION LIST

PATENT LITERATURE

Patent Literature 1: JP2017-164656A
Patent Literature 2: JP2015-009185A
Non-Patent Literature 1: J. Mater. Chem. A, 2015, 3, p. 2166 to 2175

SUMMARY OF THE INVENTION

TECHNICAL PROBLEM

However, solid adsorbents in the related art have a problem in that carbon dioxide adsorption capacity thereof is insufficient. A demand for adsorbents for treating an acid gas such as carbon dioxide is increasing, and novel adsorbents capable of increasing a capture amount of the acid gas are required.

Therefore, an object of the present invention is to provide an adsorbent that can efficiently capture acid gases and increase a capture amount of acid gases.

As a result of intensive studies, the present inventors find that a porous material that adsorbs an amine can solve the above problem by using an inorganic porous body having a pore size in a specific range and an oil absorption value or pore volume in a specific range, and complete the present invention.

The present invention relates to the following (1) to (12).

(1) An adsorbent including: an inorganic porous body; and an amine compound, in which the inorganic porous body has an oil absorption value of 230 ml/100 g or more, and a peak diameter of a pore size, which is obtained based on a nitrogen adsorption method, of 20 nm or more and 100 nm or less.

(2) An adsorbent including: an inorganic porous body; and an amine compound, in which the inorganic porous body has a pore volume of 1.2 $cm^3/g$ or more and 3.5 $cm^3/g$ or less, and a peak diameter of a pore size, which is obtained based on a nitrogen adsorption method, of 20 nm or more and 100 nm or less.

(3) The adsorbent according to (1) or (2), in which the adsorbent is an adsorbent that adsorbs carbon dioxide.

(4) The adsorbent according to any one of (1) to (3), in which the inorganic porous body has an average pore size, which is obtained based on the nitrogen adsorption method, of 15 nm or more and 100 nm or less.

(5) The adsorbent according to any one of (1) to (4), in which a content of nitrogen atoms in the adsorbent is 1 N% or more and 40 N% or less in mass ratio.

(6) The adsorbent according to any one of (1) to (5), in which the inorganic porous body includes at least one kind selected from the group consisting of silica, zeolite, alumina, silica alumina, activated carbon, titania, silica gel, aluminum silicate, magnesium silicate, and clay minerals.

(7) The adsorbent according to any one of (1) to (6), in which the amine compound is an amine compound including silicon in a molecule or a polyamine compound including 3 or more amino groups in a molecule.

(8) The adsorbent according to any one of (1) to (7), in which the amine compound is fixed to at least one of a surface of the inorganic porous body and an inner surface of a pore of the inorganic porous body.

(9) The adsorbent according to any one of (1) to (7), in which a pore of the inorganic porous body is filled with the amine compound.

(10) The adsorbent according to any one of (1) to (9), in which the inorganic porous body is powdery with an average particle size of 1 $\mu$m to 1 mm.

(11) The adsorbent according to (10), in which the inorganic porous body is spherical with a circularity of 0.8 or more.

(12) The adsorbent according to any one of (1) to (9), in which the inorganic porous body is a molded body having a maximum diameter of 1 mm to 50 mm.

ADVANTAGEOUS EFFECTS OF INVENTION

According to the present invention, a capture amount of an acid gas can be increased. Therefore, it is possible to efficiently capture an acid gas, particularly carbon dioxide, included in exhaust gas emitted from automobiles, factories, and the like, and in the atmosphere, and thus, costs of separating and capturing the acid gas can be reduced. The adsorbent is solid, and thus, it is easy to handle and safe to use.

DESCRIPTION OF EMBODIMENTS

The present invention will be described below, and the present invention is not limited by exemplifications in the following description.

In the present specification, "mass" is synonymous with "weight".

(Adsorbent)

Examples of a target to be adsorbed by the adsorbent of the present invention include an acid gas in general. Examples of the acid gas include carbon dioxide, sulfur oxides (sulfur dioxide, sulfur trioxide, and the like), nitrogen oxides (NO, $NO_2$, $NO_3$, and the like), hydrogen chloride, and the like. In particular, the adsorbent of the present invention is suitable for adsorption of carbon dioxide.

The adsorbent of the present invention includes an inorganic porous body and an amine compound.

The inorganic porous body has an oil absorption value of 230 ml/100 g or more, and a peak diameter of a pore size, which is obtained based on a nitrogen adsorption method, of 20 nm or more and 100 nm or less.

Alternatively, the inorganic porous body has a pore volume of 1.2 $cm^3/g$ or more and 3.5 $cm^3/g$ or less, and a peak diameter of a pore size, which is obtained based on a nitrogen adsorption method, of 20 nm or more and 100 nm or less.

The inorganic porous body used in the present invention has a sufficiently large oil absorption value or sufficiently large pore volume, and a sufficiently large pore size in addition. It is presumed that by using the inorganic porous body having the oil absorption value or pore volume within the above range, and the pore size within the above range, the inorganic porous body can be sufficiently impregnated with the amine compound necessary for adsorbing the acid gas, and the acid gas can easily enter a pore of the adsorbent, and a diffusibility of the acid gas is improved, and thus, a capture amount of the acid gas can be increased.

The inorganic porous body has pores, and a surface of the inorganic porous body and inside of the pore of the inorganic porous body are impregnated with the amine compound.

Examples of material constituting the inorganic porous body include, for example, silica, zeolite, alumina, silica alumina, activated carbon, titania, silica gel, aluminum silicate, magnesium silicate, and clay minerals. The inorganic porous body may include at least one kind selected from the group consisting of the above materials, and is more preferable to include at least one kind selected from the group consisting of silica, zeolite, and alumina among the above materials.

The inorganic porous body has the oil absorption value of 230 ml/100g or more. The oil absorption value affects an impregnation amount of the amine compound. In the case where the oil absorption value is high, the amine compound that can impregnate the pore can be increased, and an adsorption amount of the acid gas can be increased.

The oil absorption value is preferably 270 ml/100 g or more, more preferably 280 ml/100 g or more, further preferably 300 ml/100 g or more, and an upper limit thereof is preferably 1000 ml/100 g or less, more preferably 800 ml/100 g or less, and further preferably 600 ml/100 g or less.

Here, the oil absorption value can be measured in accordance with JIS K 5101. Specifically, boiled linseed oil is added to a sample while the entire sample is kneaded until the sample becomes a lump. The oil absorption value is represented by a volume of the boiled linseed oil per 100 g of the sample when the entire sample becomes a lump. Hereinafter, the oil absorption value obtained by this measurement method will simply be referred to as the oil absorption value.

The inorganic porous body has the pore volume of 1.2 $cm^3$/g or more and 3.5 $cm^3$/g or less. The pore volume affects the impregnation amount of the amine compound in the inorganic porous body and a strength of the inorganic porous body. As the pore volume increases, more amine compounds can impregnate, and in the case where the pore volume is 1.2 $cm^3$/g or more, the adsorption amount of the acid gas can be increased. In the case where the pore volume becomes too large, the strength of the inorganic porous body decreases, and the strength required for the adsorbent cannot be maintained, and thus, the pore volume of the inorganic porous body is set to 3.5 $cm^3$/g or less.

The pore volume of the inorganic porous body is preferably 1.3 $cm^3$/g or more, more preferably 1.6 $cm^3$/g or more, and further preferably 1.7 $cm^3$/g or more, and is 3.5 $cm^3$/g or less, preferably 3.4 $cm^3$/g or less, and more preferably 3.3 $cm^3$/g or less.

The pore volume is measured by nitrogen gas adsorption amount measurement (BET method) when a relative pressure (adsorption equilibrium pressure/saturated vapor pressure) becomes 0.95 after obtaining an adsorption isotherm by the nitrogen adsorption method.

The pore volume of the relatively large pore having a diameter of 0.02 μm or more can be measured with a mercury porosimeter. In the case where the inorganic porous body is a molded body formed from a powdery inorganic porous body, a void having a diameter of 0.02 μm or more may be formed between particles. Such pore derived from the void can be measured with the mercury porosimeter. The pore volume of the inorganic porous body is 3.5 $cm^3$/g or less when being measured with the mercury porosimeter.

The inorganic porous body has the peak diameter of the pore size, which is obtained based on the nitrogen adsorption method, of 20 nm or more and 100 nm or less. The peak diameter of the pore size affects the diffusibility of the acid gas and the strength of the inorganic porous body. The larger the peak diameter, the larger the pore space on the surface and inside of the inorganic porous body, and thus, the diffusibility of the acid gas is improved, and in the case where the peak diameter is 20 nm or more, the adsorption amount of the acid gas can be increased. In the case where the peak diameter becomes too large, the strength of the inorganic porous body decreases, and the strength required for the adsorbent cannot be maintained, and thus, the peak diameter of the pore size is set to 100 nm or less.

The peak diameter of the pore size of the inorganic porous body is 20 nm or more, preferably 24 nm or more, more preferably 30 nm or more, and 100 nm or less, preferably 70 nm or less, and more preferably 60 nm or less.

The peak diameter of the pore size is obtained from a pore size that gives a peak top when the pore volume is plotted against the pore size as a pore diameter distribution curve obtained by the nitrogen adsorption method.

The inorganic porous body used in the present invention preferably has an average pore size, which is obtained based on the nitrogen adsorption method, of 15 nm or more and 100 nm or less. The average pore size affects the diffusibility of the acid gas and the strength of the inorganic porous body. The larger the average pore size, the more pore spaces having a suitable size (volume) present on the surface and inside of the inorganic porous body, and thus, the diffusibility of the acid gas is improved, and in the case where the average pore size is 15 nm or more, the adsorption amount of the acid gas can be increased. In the case where the average pore size becomes too large, the strength of the inorganic porous body decreases, and the strength required for the adsorbent cannot be maintained, and thus, the average pore size of the inorganic porous body is preferably 100 nm or less.

The average pore size of the inorganic porous body is preferably 15 nm or more, more preferably 18 nm or more, further preferably 23 nm or more, and is preferably 100 nm or less, more preferably 50 nm or less, and further preferably 40 nm or less.

Based on the specific surface area (S) of the sample, which is determined based on the adsorption isotherm obtained by the nitrogen adsorption method, and the pore volume (V) of the sample, the average pore size of the inorganic porous body can be calculated by calculating Formula: D = 4V/S [in the formula, D represents the average pore size (average pore diameter) of the sample, V represents the pore volume of the sample, and S represents the specific surface area of the sample].

The inorganic porous body preferably has the specific surface area obtained based on the nitrogen adsorption method of 1 $m^2$/g or more and 1000 $m^2$/g or less. The specific surface area affects a density of the amine compound present per specific surface area and the diffusibility of the acid gas. In the case where the specific surface area is 1000 $m^2$/g or less, since the density per specific surface area of the amine compound impregnating the inorganic porous body increases, amino groups of the amine compounds come close to each other, and the amino groups of each other bond with the acid gas, so that an acid gas adsorption capacity increases. The number of very fine pores is reduced, and the pore spaces in the inorganic porous body are present with an appropriate size (volume), so that the diffusibility of the acid gas is improved and the adsorption is facilitated. In the case where the specific surface area is too large, cracks may occur during a drying process for adjusting the inorganic porous body. In the case where the specific surface area is 1 $m^2$/g or more, the acid gas adsorption capacity can be exhibited.

The specific surface area of the inorganic porous body is preferably 1 $m^2$/g or more, more preferably 50 $m^2$/g or more, further preferably 100 $m^2$/g or more, and is preferably 1000 $m^2$/g or less, more preferably 800 $m^2$/g or less, and further preferably 500 $m^2$/g or less.

The specific surface area can be calculated using BET theory after obtaining the adsorption isotherm by the nitrogen adsorption method.

A shape of the inorganic porous body is not particularly limited, and may be, for example, any shape in a form such as powder, granule, plate, block, and thin film, and is preferably in the form of powder or granule in consideration of efficiency of filling the separation and capture device, gas resistance, strength, and the like.

The inorganic porous body may be a primary particle, a secondary particle (aggregate) formed by agglomeration of primary particles, or a molded body formed by granulating primary particles and/or secondary particles.

A first form of the inorganic porous body is powder, and the average particle size (50% particle size, D50) in a volume-based cumulative particle size distribution is preferably 1 μm to 1 mm. In the case where the average particle size of the inorganic porous body is 1 μm or more, a pressure loss when passing a gas to be treated through the adsorbent can be prevented from increasing excessively, and in the case where the average particle size of the inorganic porous body is 1 mm or less, an inorganic porous body having higher strength can be obtained.

The average particle size (D50) of the powdery inorganic porous body is preferably 1 μm or more, more preferably 10 μm or more, and is preferably 1 mm or less, more preferably 500 μm or less, and further preferably 100 μm or less.

The average particle size (D50) can be measured by an electrical sensing zone method (Coulter counter method) in accordance with JIS Z 8832 (2010).

In the case where the inorganic porous body is powder, the inorganic porous body is preferably spherical with a circularity of 0.8 or more. By using the spherical inorganic porous body with the circularity of 0.8 or more, the efficiency of filling the adsorbent into a separation and capture device is increased, the adsorption amount of the acid gas can be improved, and the pressure loss of the adsorbent is also reduced, and thus, an efficiency of energy utilization is increased. In the case where the inorganic porous body is formed into a molded body, compared to amorphous particles, the size of the void can be easily controlled and the oil absorption value of the amine compound can be increased. In the case where the inorganic porous body is used by carrying on a filter, being sandwiched between non-woven fabrics, or being folded after being sandwiched between non-woven fabrics, fibers are less damaged and the particles are less likely to leak.

The circularity of the powdery inorganic porous body is preferably 0.8 or more, and more preferably 0.85 or more. An upper limit of the circularity is not particularly limited, and 1 is most preferable.

The circularity can be calculated by obtaining an area and a perimeter of a particle with an image obtained by a particle image analyzer (for example, "FPIA-3000S" (trade name) manufactured by Sysmex Corporation) by using image analysis software attached to the above analyzer and applying the results to the following formula.

Circularity = (perimeter of a circle having the same projected area)/(perimeter of the particle)

Perimeter of a circle having the same projected area: a length of an outline of a circle that is calculated as having the same as an area of a shadow of a certain particle reflected on a plane below when the particle is observed from directly above

Perimeter of particle: a length of an outline of a shadow of a particle reflected on a plane below when the particle is observed from directly above

A second form of the inorganic porous body is a molded body, which preferably has a maximum diameter of 1 mm to 50 mm. Here, the "maximum diameter" of the molded body means a diameter of a smallest circumscribed circle that circumscribes the molded body. In the case where the maximum diameter of the molded body of the inorganic porous body is 1 mm or more, the pressure loss during the passage of the gas to be treated can be reduced, and in the case where the maximum diameter of the molded body of the inorganic porous body is 50mm or less, a mechanical strength of the molded body can be kept sufficiently high.

The maximum diameter of the molded body is preferably 1 mm or more, more preferably 1.5 mm or more, further preferably 2 mm or more, and preferably 50 mm or less, more preferably 30 mm or less, and further preferably 10 mm or less.

Examples of a shape of the molded body include spherical, elliptical, cylindrical, polygonal columnar, rod, conical, and polygonal pyramidal shapes, irregular shapes combining these shapes, general fixed/amorphous shapes such as a honeycomb shape, and special shapes such as a Raschig ring, a Berl saddle, and a Pall ring. In the case where the filling efficiency is to be varied, it is preferable to use a molded body with a general shape, and in the case where it is desired to improve a mixing efficiency of the gas to be treated, it is preferable to use a molded body with a special shape. The molded body with a special shape disturbs a flow of the gas, intensifies the mixing, increases a diffusion rate of the gas into the molded body, and even when a space for housing the molded body in the separation and capture device is wide, the adsorbent can be uniformly arranged in that space. When molding the molded body into a special shape, the shape is not limited to the above-described shapes as long as a shape is the shape that can increase a porosity.

As for a preferable range of the mechanical strength of the molded body, a compressive strength is preferably 3 kgf or more, and more preferably 10 kgf or more. In the case where the compressive strength is 3 kgf or more, breakage and pulverization during handling can be prevented.

In the case where the inorganic porous body is a molded body, one method for producing the molded body is a method of granulating and molding a powdery inorganic porous body. Examples of the granulating and molding method include wet granulation such as spray granulation, rolling granulation, stirring granulation, and extrusion molding, in addition to dry molding such as tableting and briquetting. The molded body can also be produced by injection molding.

In the tableting molding or the briquette molding, to inorganic porous powder is added a small amount of lubricant, excipient, and the like, followed by molding with a tableting machine or a briquetting machine, thereby obtaining a molded body having a diameter of 1 mm to 20 mm and a thickness of about several 1 mm to 20 mm.

The wet granulation method is a method of granulating inorganic porous powder by adding a binder and a solvent such as water or alcohol. Examples of the binder include an organic binder and an inorganic binder, and it is preferable to select a binder that can increase the mechanical strength of the molded body even if the added amount is small. The organic binder and the inorganic binder may be used together. Examples of the organic binder include polyvinyl alcohol, butyral resin, and acrylic resin. Examples of the inorganic binder include scaly silica, silica sol, alumina sol, and montmorillonite-based clay minerals. In the case of molding using the inorganic binder, the product may be sintered at a high temperature after removing the solvent such as water and alcohol by drying. This is because sintering at a high temperature strengthens a chemical bond between the inorganic porous powder and the inorganic binder, thereby obtaining a molded body with high mechanical strength.

The spray granulation is a method in which to an inorganic porous powder and a binder is added a solvent to form a slurry, and the solvent is dried while being sprayed from a spray nozzle. A relatively small spherical molded body having a diameter of about 1 mm to 10 mm is obtained.

The rolling granulation is a method in which inorganic porous powder and a binder are placed in a pan of a pan-type granulator, and a solvent is added to perform granulation while the pan is rotating at a speed of several tens of rotations/minute. Due to a surface tension of the solvent, the inorganic porous powder and the binder are agglomerated and formed into a spherical shape, and then the solvent is dried to obtain a spherical molded body having a diameter of 1 mm to 50 mm. In the case where the added amount of the solvent is too small, only a molded body with a small size can be obtained, and in the case where the added amount of the solvent is too large, the whole one to be molded may turn into a clay-like lump, and may not be formed into a spherical shape.

The stirring granulation is a method in which inorganic porous powder and a binder are placed in a vessel of a stirring granulator, and a solvent is added to perform granulation while a stirring blade is rotating at a speed of several thousands rotations/minute. Due to a surface tension of the solvent, the inorganic porous powder and the binder are agglomerated and molded into a spherical shape, and then the solvent is dried to obtain a relatively small spherical molded body having a diameter of 1 mm to 10 mm. In the case where the added amount of the solvent is too small, only a molded body with a small size can be obtained, and in the case where the added amount of the solvent is too large, the whole one to be molded may turn into a clay-like lump, and may not be formed into a spherical shape.

In the extrusion molding, to inorganic porous powder and a binder is added a small amount of a solvent, followed by kneading to form clay, and then the obtained clay is extruded using an extruder, so that for example, the product is molded into a pellet or cylinder having a diameter of 1 mm to 10 mm and a length of 1 mm to 30 mm, and then the solvent is dried to obtain a molded body. A spherical molded body can also be obtained by granulating with placing the product right after being extruded in a spheronizer and then drying the solvent.

The injection molding is a molding method in which a kneaded product obtained by adding inorganic porous powder, a binder, and a solvent is put (injected) into a cavity having the same shape as an object, and then dried to obtain a molded product.

In the case where the inorganic porous body is a molded body, another manufacturing method of the molded body is a method specific to silica, sodium silicate and a mineral acid such as sulfuric acid are mixed to form silica primary particles with a size of several nanometers to several tens of nanometers, and the silica primary particles forms a three-dimensionally aggregated gel. A silica molded body is obtained by forming into particles having a maximum diameter of 1 mm to 50 mm after washing the gel with water, drying it, and pulverizing it, or by washing a spherical gel with water and drying it after obtaining the spherical gel having a maximum diameter of 1 mm to 50 mm with a method of spraying the gel or forming droplets of the gel in an organic solvent, or the like.

The inorganic porous body used in the present invention may be obtained by synthesis or may be commercially available.

Examples of the commercially available inorganic porous body include "SUNSPHERE L-123" (trade name) manufactured by AGC Si-Tech. Co., Ltd.

In the case where the inorganic porous body is obtained by synthesis, for example, the inorganic porous body can be synthesized according to the method described in Japanese Patent No. 6241252.

One kind of the inorganic porous body may be used singly or two or more kinds of them may be used in combination. In the case where two or more kinds are used in combination, for example, two or more kinds of powdery inorganic porous bodies with different particle sizes are combined, two or more kinds of inorganic porous molded bodies with different shapes (general shaped molded bodies) are combined, or two or more kinds of powdery inorganic porous body and molded body of inorganic porous body (general shaped molded body) are combined.

An amine compound has an amino group in a structure thereof, reacts with the acid gas, and selectively absorbs the acid gas in the gas to be treated.

When the acid gas comes into contact with the adsorbent, the amino group of the amine compound reacts with the acid gas, and one hydrogen atom of the amino group is substituted with a carboxy group. Accordingly, the acid gas in the gas to be treated is adsorbed by the adsorbent.

Examples of the amine compound having amino group include 3-aminopropyltriethoxysilane, 3-aminopropyltrimethoxysilane, N-methyl-3-aminopropyltriethoxysilane, N-methyl-3-aminopropyltrimethoxysilane, N-(2-aminoethyl)-3-aminopropyltriethoxysilane, N-(2-aminoethyl)-3-aminopropyltrimethoxysilane, (3-trimethoxysilylpropyl)diethylenetriamine, ammonia, alkanolamine (methylamine, ethylamine, n-propylamine, isopropylamine, n-butylamine, tert-butylamine, and the like), monoethanolamine, diethanolamine, N-methyldiethanolamine, isopropylaminoethanol, 2-amino-2-methyl-1-propanol, ethylenediamine, diethylenetriamine, triethylenetetramine, tetraethylenepentamine, pentaethylenehexamine, hexaethyleneheptamine, polyethyleneimine (PEI), 1,11-bis(isopropylamino)-3,6,9-triazaundecane, tetraisopropylated N,N,N',N'-tetrakis(3-aminopropyl)-1,4-butanediamine, 1,14-bis(isopropylamino)-3,6,9,12-tetraazatetradecane, 1,17-bis(isopropylamino)-3,6,9,12,15-pentaazaheptadecane, N,N'-bis(3-(isopropylamino)propyl)-1,4-butanediamine, piperazine, N-(2-aminoethyl)piperazine, melamine, imidazole, guanidine, amino acids (alanine, glycine, arginine, glutamine, lysine, and the like). These amine compounds may be used as single compounds or as mixtures.

Among the above examples, it is preferable to use an amine compound including silicon in a molecule or a polyamine compound including 3 or more amino groups in a molecule from viewpoints of raw material availability, boiling point, and viscosity. Specifically, 3-aminopropyltriethoxysilane, 3-aminopropyltrimethoxysilane, N-(2-aminoethyl)-3-aminopropyltriethoxysilane, N-(2-aminoethyl)-3-aminopropyltrimethoxysilane, (3-trimethoxysilylpropyl)diethylenetriamine, diethylenetriamine, polyethyleneimine, and arginine are preferred.

The amine compound impregnates the surface and the inside of the pore of the inorganic porous body. The term "impregnate" means a state in which the amine compound is adhered or bonded to the surface of the inorganic porous body and inner surface of the pore of the inorganic porous body.

The amine compound preferably impregnates by adhering or bonding to at least one of the surface of the inorganic porous body and the inner surface of the pore of the inorganic porous body, or by filling the pore of the inorganic porous body and adhering to the inner surface of the pore.

In the case where the amine compound is an amine compound including silicon in a molecule, the silicon-containing functional group chemically reacts with the surface of the inorganic porous body, and the amine compound impregnates the surface of the inorganic porous body or the inner surface of the pore of the inorganic porous body.

In the case where the amine compound is a polyamine compound including 3 or more amino groups in a molecule, the pore of the inorganic porous body is physically filled with the amine compound.

The impregnation amount of the amine compound in the inorganic porous body can be confirmed by a content of nitrogen atoms in the adsorbent. The amine compound preferably impregnates such that the content of nitrogen atoms in the adsorbent is 1 N% or more and 40 N% or less in mass ratio. In the case where the content of nitrogen atoms in the adsorbent is 1 N% or more in mass ratio, the adsorption amount of the acid gas can be improved, and in the case where the content of nitrogen atoms in the adsorbent is 40 N% or less in mass ratio, stickiness of the adsorbent due to the excess amine compound exceeding the pore volume of the inorganic porous body is reduced, and handling is easy.

In mass ratio, the content of the nitrogen atoms in the adsorbent is preferably 1 N% or more, more preferably 2 N% or more, and further preferably 3 N% or more, and is preferably 40 N% or less, more preferably 35 N% or less, and further preferably 30 N% or less.

The content of the nitrogen atoms in the adsorbent can be calculated according to the mass ratio of the nitrogen atoms with respect to a total atomic mass of the inorganic porous body and the impregnating amine compound.

The adsorbent of the present invention may include components other than the inorganic porous body and the amine compound as long as the effects of the present invention are not impaired.

Examples of the other components include, for example, a binder compound used for granulation. Any binder compound may be used as long as the binder compound can bind the inorganic porous body, and examples of the binder compound include polymers such as polyvinyl alcohol, butyral resin, and acrylic resin, sol-gel, cement, scaly silica, silica sol, alumina sol, montmorillonite-based clay minerals, silicate, and phosphate. These binder compounds are commercially available or can be easily produced by known methods.

The shape of the adsorbent according to the present invention is not particularly limited, is a shape that conforms to the shape of the inorganic porous body or a shape that conforms to the molded body thereof, and may be in any shape such as powder, granule, plate, block, and thin film. Considering the efficiency of filling the separation and capture device, gas resistance, strength, and the like, the adsorbent is preferably in the form of powder, granule, or cylinder.

A first form of the adsorbent is powder having the average particle size (50% particle size, D50) of 1 μm to 1 mm in the volume-based cumulative particle size distribution. In the case where the average particle size of the adsorbent is 1 μm or more, the pressure loss during the passage of the gas to be treated can be prevented from excessively high, and in the case where the average particle size is 1 mm or less, an adsorbent with higher strength can be obtained.

The average particle size of the adsorbent is preferably 1 μm or more, more preferably 10 μm or more, and is preferably 1 mm or less, more preferably 500 μm or less, and further preferably 100 μm or less.

The average particle size (D50), as described above, can be measured by an electrical sensing zone method (Coulter counter method) in accordance with JIS Z 8832 (2010).

In the case where the adsorbent is powder, the circularity thereof also conforms to the circularity of the inorganic porous body. The adsorbent is preferably spherical with a circularity of 0.8 or more. In the case where the circularity of the adsorbent is 0.8 or more, the efficiency of filling the separation and capture device is increased, the adsorption amount of the acid gas can be improved, and the pressure loss is reduced, resulting in high efficiency of energy utilization.

The circularity of the adsorbent is preferably 0.8 or more, and more preferably 0.85 or more. An upper limit of the circularity is not particularly limited, and 1 is most preferable.

The circularity can be calculated from the image obtained by the particle image analyzer using the image analysis software attached to the analyzer, as described above.

A second form of the adsorbent is a molded body, and a maximum diameter thereof (diameter of a smallest circumscribed circle that circumscribes the molded body) is preferably 1 mm to 50 mm. In the case where the maximum diameter of the molded body is 1 mm or more, the pressure loss during the passage of the gas to be treated can be reduced, and in the case where the maximum diameter of the molded body is 50mm or less, a mechanical strength of the molded body can be kept sufficiently high.

The maximum diameter of the molded body is preferably 1 mm or more, more preferably 1.5 mm or more, further preferably 2 mm or more, and preferably 50 mm or less, more preferably 30 mm or less, and further preferably 10 mm or less.

In the case where the adsorbent is the molded body, the shape of the molded body is not particularly limited as long as the efficiency of filling the separation and capture device, the mixing efficiency of the gas to be treated, and the like are taken into consideration. Examples of the shape of the molded body include spherical, elliptical, cylindrical, polygonal columnar, rod, conical, and polygonal pyramidal shapes, irregular shapes combining these shapes, general fixed/amorphous shapes such as a honeycomb shape, and special shapes such as a Raschig ring, a Berl saddle, and a Pall ring.

In the case where the adsorbent is the molded body, the mechanical strength thereof also conforms to an aspect ratio of the molded body of the inorganic porous body. The mechanical strength of the molded body (adsorbent) is preferably 3 kgf or more, more preferably 10 kgf or more, in terms of compressive strength. In the case where the compressive strength is 3 kgf or more, breakage and pulverization during handling can be prevented.

(Production of Adsorbent)

The adsorbent of the present invention can be produced, for example, by the following method (1) or (2).

(1) A method of fixing an amine compound to at least one of a surface of an inorganic porous body and an inner surface of a pore of an inorganic porous body.
(2) A method of filling a pore of an inorganic porous body with an amine compound.

The adsorbent of the present invention may be obtained by one of the methods (1) and (2), or may be obtained by combining both methods.

In the method (1), the amine compound including silicon in the molecule is used as the amine compound.

The amine compound including silicon is brought into contact with the inorganic porous body, followed by reacting with taking time or heating, thereby obtaining the adsorbent of the present invention. The amine compound may be dissolved in a solvent, or a plurality of amine compounds may be mixed.

Examples of the solvent for the amine solution include water, alcohols, ethers, esters, amines, and amides. Among the above solvents, it is preferable to use alcohols from a viewpoint of availability and ease of removal after contact with the inorganic porous body. From a viewpoint of eliminating the need for the removing step, it is more preferable to directly come into contact with the amine compound without a solvent.

A concentration of the amine compound in the amine solution is preferably 20 % by mass to 100 % by mass from a viewpoint of increasing an efficiency of coming into contact with the inorganic porous body and an impregnation amount. The concentration is more preferably 25 % by mass or more, and further preferably 50 % by mass or more.

The amine solution may contain other components as long as the components do not impair the effects of the present invention. Examples of the other components include platinum, ruthenium, rhodium, and the like.

The contact between the amine solution and the inorganic porous body can be carried out by a well-known method, for example, a method of immersing the inorganic porous body in the amine solution, a method of dropping or spraying the amine solution onto the inorganic porous body, and a method of precipitating the inorganic porous body in the amine solution. Among the above methods, the method of dropping or spraying the amine solution onto the inorganic porous body is preferable from a viewpoint of simplicity of operation.

It is preferable to react the amine solution and the inorganic porous body at 20 °C to 150 °C for 1 hour to 48 hours after contact.

In the case where the reaction temperature is 20 °C or higher, the reaction between the silicon-containing functional group of the amine compound and the hydroxyl group on the surface of the inorganic porous body progresses rapidly, and in the case where the reaction temperature is 150 °C or lower, the oxidation of the amine compound can be suppressed, and the volatilization of the amine compound before the reaction can be prevented. The reaction temperature is preferably 20 °C or higher, more preferably 40 °C or higher, and preferably 150 °C or lower, and more preferably 100 °C or lower.

In the case where the reaction time is 1 hour or more, the silicon-containing functional group of the amine compound reacts sufficiently with the hydroxyl group on the surface of the inorganic porous body, and in the case where the reaction time is 48 hours or less, the production process can be shortened. The reaction time is preferably 1 hour or longer, more preferably 2 hours or longer, and preferably 48 hours or shorter, and more preferably 24 hours or shorter.

After the reaction, if necessary, a drying process can be performed while reducing the pressure. The drying may be performed at 20 °C to 150 °C for about 1 hour to 24 hours.

In the method (2), the polyamine compound including 3 or more amino groups in the molecule is used as the amine compound.

The adsorbent of the present invention is obtained by bringing the amine solution obtained by dissolving the polyamine compound in the solvent into contact with the inorganic porous body, and, if necessary, heating and holding the amine solution.

Examples of the solvent for the amine solution include water, alcohols, ethers, esters, amines, and amides. Among the above solvents, it is preferable to use alcohols from a viewpoint of availability and ease of removal after contact with the inorganic porous body. From a viewpoint of eliminating the need for the removing step, it is more preferable to directly come into contact with the amine compound without a solvent.

A concentration of the amine compound in the amine solution is preferably 20 % by mass to 100 % by mass from a viewpoint of increasing an efficiency of coming into contact with the inorganic porous body and an impregnation amount. The concentration is more preferably 25 % by mass or more, and further preferably 50 % by mass or more.

The amine solution may contain other components as long as the components do not impair the effects of the present invention. Examples of the other components include an amine compound including 1 to 2 amino groups in the molecule.

The contact between the amine solution and the inorganic porous body can be carried out by a well-known method, for example, a method of immersing the inorganic porous body in the amine solution, a method of dropping or spraying the amine solution onto the inorganic porous body, and a method of precipitating the inorganic porous body in the amine solution. Among the above methods, the method of dropping or spraying the amine solution onto the inorganic porous body is preferable from a viewpoint of simplicity of operation.

After bringing the amine solution into contact with the inorganic porous body, the mixture may be left at 20 °C to 150 °C for 1 hour to 48 hours, and may be stirred if necessary.

In the case where the reaction temperature is 20 °C or higher, the viscosity of the amine compound decreases, and the pore of the inorganic porous body is easily filled with the amine compound, and in the case where the reaction temperature is 150°C or lower, the oxidation of the amine compound can be suppressed, and the volatilization of the amine compound before the reaction can be prevented. The reaction temperature is preferably 20 °C or higher, more preferably 25 °C or higher, and preferably 150 °C or lower, and more preferably 100 °C or lower.

In the case where the reaction time is 1 hour or more, the pore of the inorganic porous body is sufficiently filled with the amine compound, and in the case where the reaction time is 48 hours or less, the production process can be shortened. The reaction time is preferably 1 hour or longer, more preferably 2 hours or longer, and preferably 48 hours or shorter, and more preferably 24 hours or shorter.

After the reaction, if necessary, the drying process can be performed. The drying may be performed at 20 °C to 150 °C for about 1 hour to 24 hours. The drying process may be performed while reducing the pressure.

(Adsorption and Desorption Method using adsorbent)

The adsorbent of the present invention can be used to adsorb and remove the acid gas from the gas including the acid gas.

The gas to be treated using the adsorbent of the present invention may be any gas including the acid gas. Examples of the gas to be treated include gas including carbon dioxide ($CO_2$), carbon monoxide (CO), hydrocarbon (HC), sulfur oxides (sulfur dioxide, sulfur trioxide, and the like), nitrogen oxides ($NO_x$), hydrogen chloride, water vapor, particulate matter (PM), and more specifically, examples thereof include the atmosphere, fuel exhaust gas from automobiles and factories, industrial gases such as helium gas and nitrogen gas, and gas discharged from human breathing, energy conversion by equipment in a closed space such as a space station or the like.

The concentration of the acid gas in the gas to be treated is not particularly limited as long as the adsorbent can withstand the conditions, and for example, the concentration is preferably 100 % by volume or less, more preferably 50 % by volume or less, and further preferably 30 % by volume or less. Although a lower limit is not particularly limited, it is preferably 0.01 % by volume or more.

In the case where the acid gas includes carbon dioxide, a concentration of carbon dioxide in the gas to be treated is preferably 30 % by volume or less. The adsorbent of the present invention can exhibit a sufficient adsorption capacity for the gas to be treated including carbon dioxide at the concentration of 30 % by volume or less.

The gas to be treated may be at atmospheric pressure or pressurized.

Examples of an acid gas adsorption and desorption method include a pressure swing method (PSA method) that uses a pressure difference to perform adsorption and desorption, a thermal swing method (TSA method) that uses a temperature difference to perform adsorption and desorption, and a method in which the gas to be treated including an acid gas is brought into contact with an adsorbent to be adsorbed and then desorbed by contact with an inert gas that does not include the acid gas.

In the PSA method, the higher the total pressure of the atmosphere (for example, the total pressure in the vessel including the adsorbent) in which the adsorbent is present, the greater the adsorption amount of the acid gas, and thus, it is preferable to change the total pressure in a desorption process to be lower than the total pressure in an adsorption process. The total pressure may be adjusted by being increased or reduced, or both increased and reduced.

In the TSA method, for example, the temperature of the adsorbent is made higher in the desorption process than in the adsorption process. Examples of a method for heating the adsorbent include a method of bringing the heated gas to be treated directly into contact with the adsorbent, a method of heating the adsorbent by heat conduction from a heat transfer surface using a heat transfer tube or the like, and a method of heating the adsorbent with an electric furnace or the like.

In the method of adsorption and desorption using the inert gas that does not include acid gas, the gas to be treated is brought into contact with the adsorbent to cause the adsorbent to adsorb the acid gas, and then the adsorbent with the acid gas adsorbed is brought into contact with the inert gas. Thus, the acid gas adsorbed by the adsorbent is replaced with the inert gas, and the acid gas can be captured. Any inert gas may be used as long as the adsorbent is stable in the gas, and examples thereof include water vapor, argon, and nitrogen.

The adsorbent of the present invention can be used for adsorption again by performing the desorption process after the adsorption process.

EXAMPLE

Hereinafter, the present invention will be described with reference to examples, but the present invention is not limited thereto. Unless otherwise specified, "part" and "%" represent "mass part" and "% by mass", respectively. Examples 1 to 2 and 6 to 13 are working examples, and Examples 3 to 5, 14, and 15 are comparative examples.

<Evaluation Method>

Evaluations performed on adsorbents of Examples 1 to 15 are shown below.

(Pore Volume, Peak Diameter, and Average Pore Size)

A pore volume, a peak diameter, and an average pore size of an inorganic porous body were measured by the BET method and a BJH method based on a nitrogen adsorption method using a specific surface area and pore distribution measuring device "BELSORP-miniII" (trade name, manufactured by MicrotracBEL Corporation).

(Oil Absorption Value)

An oil absorption value of the inorganic porous body was measured in accordance with JIS K 5101.
Boiled linseed oil is added to the inorganic porous body as a sample while kneading until the entire sample becomes a lump, and a volume of the boiled linseed oil per 100 g of the sample was obtained when the entire sample became a lump.

(Average Particle Size (D50))

An average particle size (D50) of the adsorbent was measured by an electrical sensing zone method using a precision particle size distribution analyzer "Multisizer 3" (trade name, manufactured by Beckman Coulter, Inc.).

(Circularity)

A circularity of the adsorbent was measured by image analysis using a flow-type particle image analyzer "FPIA-3000S" (trade name, manufactured by SYSMEX CORPORATION), and was judged based on the circularity of 0.8.

(Content of Nitrogen Atom)

A content of nitrogen atoms of the adsorbent was obtained by dividing a mass of the nitrogen atoms in an amine compound impregnating the inorganic porous body by a total value of each atomic mass of the inorganic porous body and each atomic mass of the amine compound impregnating the inorganic porous body.

(Adsorption Amount of Carbon Dioxide)

"BELCAT II" (trade name) manufactured by MicrotracBEL Corporation is used as a measuring device, and a change in an adsorption amount of carbon dioxide over time (carbon dioxide adsorption curve) was measured by the following procedure, and the adsorption amount of carbon dioxide of the adsorbent was calculated.

    1. A sample tube (inner diameter: 10 mm) in the measuring device was filled with 0.1 g of an inorganic porous body impregnated with an amine compound, and a temperature inside the sample tube was set to 23 °C.
    2. Carbon dioxide diluted with helium to a concentration of 10 % by volume was introduced into the sample tube through a mass flow controller at a flow rate of 30 ml/s.
    3. A gas that has passed through the sample tube was detected by TCD mounted in the device, it was confirmed that the concentration of carbon dioxide reached 10 % by volume (i.e., saturated adsorption), and the adsorption process was finished, then the carbon dioxide adsorption curve of the inorganic porous body impregnated with the amine compound was obtained.
    4. Next, in the above 1., the above 1. to 3. were performed without adding any sample to obtain a blank carbon dioxide adsorption curve.
    5. By subtracting the carbon dioxide adsorption curve of the inorganic porous body impregnated with the amine compound from the blank carbon dioxide adsorption curve, the amount of carbon dioxide adsorbed by the adsorbent was obtained.

The inorganic porous bodies and amine compounds used in Examples 1 to 15 are as follows.

(Inorganic Porous Body)

- Inorganic porous body A: silica, specific surface area: 277 $m^3/g$, pore volume: 2.0 $cm^3/g$, peak diameter of a pore size: 50 nm
- Inorganic porous body B: silica, specific surface area: 735 $m^3/g$, pore volume: 1.6 $cm^3/g$, peak diameter of a pore size: 20 nm

- Inorganic porous body C: silica, specific surface area: 296 $m^3/g$, pore volume: 2.2 $cm^3/g$, peak diameter of a pore size: 42 nm
- Inorganic porous body D: silica, specific surface area: 363 $m^3/g$, pore volume: 2.1 $cm^3/g$, peak diameter of a pore size: 30 nm
- Inorganic porous body E: silica, specific surface area: 660 $m^3/g$, pore volume: 3.1 $cm^3/g$, peak diameter of a pore size: 24 nm
- Inorganic porous body F: silica, specific surface area: 1000 $m^3/g$, pore volume: 1.0 $cm^3/g$, peak diameter of a pore size: 3.3 nm
- Inorganic porous body G: silica, specific surface area: 700 $m^3/g$, pore volume: 1.1 $cm^3/g$, peak diameter of a pore size: 6.0 nm
- Inorganic porous body H: silica, specific surface area: 836 $m^3/g$, pore volume: 0.8 $cm^3/g$, peak diameter of the pore size: 4.0 nm
- Inorganic porous body I: silica molded body, specific surface area: 462 $m^3/g$, pore volume: 1.4 $cm^3/g$, peak diameter of a pore size: 24 nm
- Inorganic porous body J: silica, specific surface area: 296 $m^3/g$, pore volume: 1.6 $cm^3/g$, peak diameter of a pore size: 22 nm
- Inorganic porous body K: silica, specific surface area: 235 $m^3/g$, pore volume: 2.6 $cm^3/g$, peak diameter of a pore size: 45 nm
- Inorganic porous body L: silica, specific surface area: 461 $m^3/g$, pore volume: 1.5 $cm^3/g$, peak diameter of a pore size: 12 nm

(Amine Compound)

- Amine compound a: 3-aminopropyltriethoxysilane (APS)
- Amine compound b: diethylenetriamine (triamine)

(Example 1)

An adsorbent was prepared by the inorganic porous body A (silica, specific surface area: 277 $m^3/g$, pore volume: 2.0 $cm^3/g$, peak diameter of a pore size: 50 nm) impregnated with the amine compound a (3-aminopropyltriethoxysilane) in the following manner.

A required amount of the inorganic porous body A was weighed out into a flask, and the pore volume was calculated from the weight. The amine compound a corresponding to 95 % to 100 % of the obtained pore volume was weighed out into another vessel.

The amine compound a was divided into small portions with a glass pipette and added dropwise to the inorganic porous body A in the flask. Next, the flask was covered and shaken such that the inorganic porous body A and the amine compound a were sufficiently in contact with each other. After repeating the above operations several times and bringing all the weighed amine compounds a into contact with the inorganic porous body A, the mixture was kept at room temperature for 1 hour. Then, the mixture was placed in an inert oven at 80 °C and dried for 16 hours while pressure was being reduced. After drying, the conditions were returned to room temperature and normal pressure to obtain the adsorbent.

(Examples 2 to 5)

An adsorbent was prepared in the same manner as in Example 1, except that the inorganic porous body was changed to one shown in Table 1.

(Example 6)

An adsorbent was prepared by filling the inorganic porous body A (silica, specific surface area: 277 $m^3/g$, pore volume: 2.0 $cm^3/g$, peak diameter of a pore size: 50 nm) with an amine compound b (diethylenetriamine) in the following manner.
A required amount of the inorganic porous body A was weighed out into a flask, and the pore volume was calculated from the weight. The amine compound b corresponding to 95 % to 100 % of the obtained pore volume was weighed out into another vessel.
The amine compound b was divided into small portions with a glass pipette and added dropwise to the inorganic porous body A in the flask. Next, the flask was covered and shaken such that the inorganic porous body A and the amine compound b were sufficiently in contact with each other. After repeating the above operations several times and bringing all the weighed amine compounds b into contact with the inorganic porous body A, the mixture was kept at room temperature for 1 hour. Then, the mixture was placed in an inert oven at 50 °C and dried for 24 hours. After drying, the condition was returned to room temperature to obtain the adsorbent.

(Examples 7 to 10 and 12 to 15)

An adsorbent was prepared in the same manner as in Example 6, except that the inorganic porous body was changed to one shown in Table 2.

(Example 11)

The inorganic porous body I (silica molded body, specific surface area: 462 $m^3/g$, pore volume: 1.4 $cm^3/g$, peak diameter of a pore size: 24 nm) was prepared as follows.
16.1 parts of spherical porous silica powder having a particle size of 3 $\mu$m (SUNSPHERE H32, manufactured by AGC Si-Tech Co., Ltd.), 15.9 parts of spherical porous silica powder having a particle size of 35 $\mu$m (SUNSPERA L-303, manufactured by AGC Si-Tech Co., Ltd.), 68.0 parts of scaly silica slurry (SUNLOVELY, manufactured by AGC Si-Tech Co., Ltd., solid concentration = 5.0%) as an inorganic binder, and 26.0 parts of ion-exchanged water were mixed and kneaded. After that, the kneaded product was extruded and molded into a cylinder having a diameter of 5 mm and a length of 5 mm, and dried at 110°C for 2 hr to obtain a molded body (inorganic porous body I).
A mechanical strength of the obtained inorganic porous body I was 5 kgf. A digital hardness tester KHT-40N type (manufactured by FUJIWARA SCIENTIFIC CO., LTD) was used to measure the mechanical strength.
When the pore volume of the inorganic porous body I was measured by a mercury porosimeter method, the pore volume was 2.0 $cm^3/g$.
Then, an adsorbent was prepared in the same manner as in Example 6, except that the inorganic porous body I was used instead of the inorganic porous body A.
Using the adsorbent obtained above, the average particle size (D50), the circularity or the size of the molded body, the content of nitrogen atoms, and the adsorption amount of carbon dioxide were measured. Tables 1 and 2 show the results.

[Table 1]

| | | | Inorganic porous body | | | | |
|---|---|---|---|---|---|---|---|
| | | Shape | Oil absorption value (ml/100 g) | Specific surface area ($m^3/g$) | Pore volume ($cm^3/g$) | Peak diameter of a pore size (nm) | Average pore size (nm) |
| Example 1 | A | Powder | 350 | 277 | 2.0 | 50 | 28.9 |
| Example 2 | B | Powder | 286 | 735 | 1.6 | 20 | 8.7 |
| Example 3 | F | Powder | 187 | 1000 | 1.0 | 3.3 | 3.9 |

(continued)

| | | Inorganic porous body | | | | | |
|---|---|---|---|---|---|---|---|
| | | Shape | Oil absorption value (ml/ 100 g) | Specific surface area (m$^3$/g) | Pore volume (cm$^3$/g) | Peak diameter of a pore size (nm) | Average pore size (nm) |
| Example 4 | G | Powder | 206 | 700 | 1.1 | 6.0 | 6.3 |
| Example 5 | H | Powder | 158 | 836 | 0.8 | 4.0 | 3.8 |
| | | Adsorbent | | | | | |
| | Amine compound | Average particle size (D50) ($\mu$m) | Circularity | Content of nitrogen atom (N%) | Adsorption amount of carbon dioxide (g/g‾cat) | | |
| Example 1 | a (APS) | 14 | ≥ 0.8 | 6.1 | 0.100 | | |
| Example 2 | a (APS) | 12 | ≥ 0.8 | 4.9 | 0.059 | | |
| Example 3 | a (APS) | < 1 | < 0.8 | 4.1 | 0.017 | | |
| Example 4 | a (APS) | 50 | ≥ 0.8 | 3.6 | 0.054 | | |
| Example 5 | a (APS) | 12 | ≥ 0.8 | 3.6 | 0.042 | | |

[Table 2]

| | | Inorganic porous body | | | | | |
|---|---|---|---|---|---|---|---|
| | | Shape | Oil absorption value (ml/ 100 g) | Specific surface area (m$^3$/g) | Pore volume (cm$^3$/g) | Peak diameter of a pore size (nm) | Average pore size (nm) |
| Example 6 | A | Powder | 350 | 277 | 2.0 | 50 | 28.9 |
| Example 7 | C | Powder | 381 | 296 | 2.2 | 42 | 29.7 |
| Example 8 | D | Powder | 367 | 363 | 2.1 | 30 | 23.2 |
| Example 9 | B | Powder | 286 | 735 | 1.6 | 20 | 8.7 |
| Example 10 | E | Powder | 521 | 660 | 3.1 | 24 | 18.7 |
| Example 11 | I | Molded body | 280 | 462 | 1.4 | 24 | 12.0 |
| Example 12 | J | Powder | 287 | 296 | 1.6 | 22 | 21.8 |

(continued)

| | | Inorganic porous body | | | | | |
|---|---|---|---|---|---|---|---|
| | | Shape | Oil absorption value (ml/100 g) | Specific surface area (m³/g) | Pore volume (cm³/g) | Peak diameter of a pore size (nm) | Average pore size (nm) |
| Example 13 | K | Powder | 452 | 235 | 2.6 | 45 | 44.9 |
| Example 14 | H | Powder | 158 | 836 | 0.8 | 4.0 | 3.8 |
| Example 15 | L | Powder | 268 | 461 | 1.5 | 12 | 12.9 |
| | | Adsorbent | | | | | |
| | Amine compound | Average particle size (D50) (μm) | Circularity | Maximum diameter (mm) | Content of nitrogen atom (N%) | Adsorption amount of carbon dioxide (g/g⁻cat) | |
| Example 6 | b (triamine) | 14 | ≥ 0.8 | - | 27.2 | 0.207 | |
| Example 7 | b (triamine) | 35 | ≥ 0.8 | - | 27.9 | 0.192 | |
| Example 8 | b (triamine) | 43 | ≥ 0.8 | - | 27.5 | 0.192 | |
| Example 9 | b (triamine) | 12 | ≥ 0.8 | - | 25.0 | 0.183 | |
| Example 10 | b (triamine) | 47 | ≥ 0.8 | - | 28.5 | 0.152 | |
| Example 11 | b (triamine) | - | - | 7.1 | 21.7 | 0.180 | |
| Example 12 | b (triamine) | 5.7 | < 0.8 | - | 24.7 | 0.214 | |
| Example 13 | b (triamine) | 7.5 | < 0.8 | - | 29.2 | 0.178 | |
| Example 14 | b (triamine) | 12 | ≥ 0.8 | - | 17.9 | 0.096 | |
| Example 15 | b (triamine) | 5.6 | < 0.8 | - | 23.9 | 0.146 | |

From the results in Table 1, Examples 1 to 5 are those in which the amine compound is fixed on a surface of the inorganic porous body, it was found that Examples 1 and 2 have higher adsorption amounts of carbon dioxide than Examples 3 to 5, and are excellent in the adsorption capacity of carbon dioxide. In particular, Example 1 had a significantly high adsorption amount of carbon dioxide.

From the results in Table 2, Examples 6 to 15 are those in which the pores of the inorganic porous body were filling with the amine compound, it was found that Examples 6 to 13 have higher adsorption amounts of carbon dioxide than Examples 14 to 15, and are excellent in the adsorption capacity of carbon dioxide.

Although the present invention has been described in detail with reference to specific embodiments, it is apparent to those skilled in the art that various changes and modifications can be made without departing from the spirit and scope of the present invention. The present application is based on a Japanese Patent Application (No. 2020-190362) filed on November 16, 2020, the contents of which are incorporated herein by reference.

**Claims**

1. An adsorbent comprising:

   an inorganic porous body; and
   an amine compound, wherein
   the inorganic porous body has an oil absorption value of 230 ml/100 g or more, and a peak diameter of a pore size, which is obtained based on a nitrogen adsorption method, of 20 nm or more and 100 nm or less.

2. An adsorbent comprising:

   an inorganic porous body; and
   an amine compound, wherein
   the inorganic porous body has a pore volume of 1.2 $cm^3$/g or more and 3.5 $cm^3$/g or less, and a peak diameter of a pore size, which is obtained based on a nitrogen adsorption method, of 20 nm or more and 100 nm or less.

3. The adsorbent according to claim 1 or 2, wherein
   the adsorbent is an adsorbent that adsorbs carbon dioxide.

4. The adsorbent according to any one of claims 1 to 3, wherein
   the inorganic porous body has an average pore size, which is obtained based on the nitrogen adsorption method, of 15 nm or more and 100 nm or less.

5. The adsorbent according to any one of claims 1 to 4, wherein
   a content of nitrogen atoms in the adsorbent is 1 N% or more and 40 N% or less in mass ratio.

6. The adsorbent according to any one of claims 1 to 5, wherein
   the inorganic porous body comprises at least one kind selected from the group consisting of silica, zeolite, alumina, silica alumina, activated carbon, titania, silica gel, aluminum silicate, magnesium silicate, and clay minerals.

7. The adsorbent according to any one of claims 1 to 6, wherein
   the amine compound is an amine compound comprising silicon in a molecule or a polyamine compound comprising 3 or more amino groups in a molecule.

8. The adsorbent according to any one of claims 1 to 7, wherein
   the amine compound is fixed to at least one of a surface of the inorganic porous body and an inner surface of a pore of the inorganic porous body.

9. The adsorbent according to any one of claims 1 to 7, wherein
   a pore of the inorganic porous body is filled with the amine compound.

10. The adsorbent according to any one of claims 1 to 9, wherein
    the inorganic porous body is powdery with an average particle size of 1 $\mu$m to 1 mm.

11. The adsorbent according to claim 10, wherein
    the inorganic porous body is spherical with a circularity of 0.8 or more.

12. The adsorbent according to any one of claims 1 to 9, wherein
    the inorganic porous body is a molded body having a maximum diameter of 1 mm to 50 mm.

## INTERNATIONAL SEARCH REPORT

International application No.

**PCT/JP2021/041433**

### A. CLASSIFICATION OF SUBJECT MATTER

***B01J 20/22***(2006.01)i; ***B01J 20/28***(2006.01)i; ***C01B 32/50***(2017.01)i
FI:  B01J20/22 A; B01J20/28 Z; C01B32/50

According to International Patent Classification (IPC) or to both national classification and IPC

### B. FIELDS SEARCHED

Minimum documentation searched (classification system followed by classification symbols)

B01J20/22; B01J20/28; C01B32/50

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2005-906 A (TOYO SEIKAN KAISHA LTD) 06 January 2005 (2005-01-06) claims, paragraphs [0049], [0050], [0056], [0065], table 1 | 1-2, 4, 6-10, 12 |
| A | | 3, 5, 11 |
| A | JP 11-313879 A (MIZUSAWA IND CHEM LTD) 16 November 1999 (1999-11-16) | 1-12 |
| A | JP 2001-129066 A (MIZUSAWA IND CHEM LTD) 15 May 2001 (2001-05-15) | 1-12 |
| A | JP 2014-94914 A (TOSOH SILICA CORP) 22 May 2014 (2014-05-22) | 1-12 |
| A | JP 2012-504050 A (RHODIA OPERATIONS) 16 February 2012 (2012-02-16) | 1-12 |
| A | WO 2018/155494 A1 (OSAKA GAS CHEMICALS CO LTD) 30 August 2018 (2018-08-30) | 1-12 |
| A | WO 2020/095934 A1 (KAWASAKI HEAVY IND LTD) 14 May 2020 (2020-05-14) | 1-12 |
| A | WO 2018/207633 A1 (KAWASAKI HEAVY IND LTD) 15 November 2018 (2018-11-15) | 1-12 |
| A | WO 2017/159663 A1 (KAWASAKI HEAVY IND LTD) 21 September 2017 (2017-09-21) | 1-12 |

✓ Further documents are listed in the continuation of Box C.      ✓ See patent family annex.

| | |
|---|---|
| \*     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **13 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/041433**

**C. DOCUMENTS CONSIDERED TO BE RELEVANT**

| Category* | Citation of document, with indication, where appropriate, of the relevant passages | Relevant to claim No. |
|---|---|---|
| A | KR 10-2013-0122332 A (INHA INDUSTRY PARTNERSHIP INSTITUTE) 07 November 2013 (2013-11-07) | 1-12 |

Form PCT/ISA/210 (second sheet) (January 2015)

<div align="center">

**INTERNATIONAL SEARCH REPORT**
**Information on patent family members**

</div>

International application No.

**PCT/JP2021/041433**

| Patent document cited in search report | | | Publication date (day/month/year) | Patent family member(s) | | | Publication date (day/month/year) |
|---|---|---|---|---|---|---|---|
| JP | 2005-906 | A | 06 January 2005 | (Family: none) | | | |
| JP | 11-313879 | A | 16 November 1999 | (Family: none) | | | |
| JP | 2001-129066 | A | 15 May 2001 | (Family: none) | | | |
| JP | 2014-94914 | A | 22 May 2014 | (Family: none) | | | |
| JP | 2012-504050 | A | 16 February 2012 | US | 2011/0293498 | A1 | |
| | | | | WO | 2010/037967 | A2 | |
| | | | | EP | 2331236 | A1 | |
| | | | | FR | 2936429 | A1 | |
| WO | 2018/155494 | A1 | 30 August 2018 | (Family: none) | | | |
| WO | 2020/095934 | A1 | 14 May 2020 | CN | 111801151 | A | |
| | | | | JP | 2020-75215 | A | |
| WO | 2018/207633 | A1 | 15 November 2018 | US | 2020/0197905 | A1 | |
| | | | | CN | 110582350 | A | |
| | | | | JP | 2018-187574 | A | |
| WO | 2017/159663 | A1 | 21 September 2017 | US | 2019/0126235 | A1 | |
| | | | | CN | 108778489 | A | |
| | | | | JP | 2017-164656 | A | |
| | | | | JP | 6055134 | B1 | |
| KR | 10-2013-0122332 | A | 07 November 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017164656 A
- JP 2015009185 A
- JP 6241252 B
- JP 2020190362 A

**Non-patent literature cited in the description**

- *J. Mater. Chem. A,* 2015, vol. 3, 2166-2175